# EUROPÄISCHE PATENTANMELDUNG

(11) **EP 1 652 800 A1**
(43) Veröffentlichungstag der Anmeldung: **03.05.2006**
(21) Anmeldenummer: 05021872.6
(22) Anmeldetag: 07.10.2005
(51) Int. Cl.: B65G 47/244

(54) **Drehstation zur Drehung von Packungen um ihre Hochachse**

(30) Priorität: 30.10.2004 DE 102004052784
(71) Anmelder: KHS AG, 44143 Dortmund (DE)
(72) Erfinder: Wagner, Stefan, 46509 Xanten (DE); Ripkens, Hans-Gerd, 47574 Goch (DE); Willemsen, Stefan, 47652 Weeze (DE); Nebel, Frank, 47533 Kleve (DE)

(57) **Zusammenfassung**

Vorgestellt wird eine Drehstation (16) zur Drehung von Packungen mit 2- oder n-eckigem Querschnitt, mit einer im Wesentlichen ebenen Grundfläche, welche von einem Transportförderer (17) bewegt werden, um einen Winkel von vorzugsweise 90° um ihre Hochachse, dabei ist vorgesehen, dass die Drehstation (16) zumindest aus einem drehangetriebenen Hauptrad (13) und mindestens einem an diesem Hauptrad (13) angeordneten Drehelement (14) besteht.

## Beschreibung

Die vorliegende Erfindung betrifft eine Drehstation für 2- oder n-eckige Packungen gemäß dem Oberbegriff des Anspruches 1. Vorteilhaft Weiterbildungen sind in den Unteransprüchen angegeben.

Ein großer Anteil der in den Handel gelangenden Produkte sind verpackt. Dabei stellen viereckige Verpackungen mit einer im Wesentlichen ebenen Grundfläche den größten Anteil dar. Diese Verpackungen können z.B. aus Blech, Kunststoff oder aber auch aus Karton, Pappe oder Papier bestehen. Hinsichtlich der in diesen Verpackungen verpackten Güter gibt es nur wenige Beschränkungen, so dass nahezu alle Güter wie z.B. Mehl, Nägel, Reis, Getränke usw. in derartigen Verpackungen angeboten werden. Bei der Produktion derartiger Güter handelt es sich in aller Regel um eine Massenproduktion, welche auf die Ausbringung hoher Stückzahlen ausgerichtet und optimiert ist, so dass z.B. je Zeiteinheit bereits mit Produkt befüllte Packungen in großer Zahl anfallen.

Um die Investitionskosten und den Raumbedarf für derartige Produktionsanlagen so gering wie möglich zu halten, hat es sich als besonders vorteilhaft heraus gestellt, die Verpackungen und Packungen nach Möglichkeit "auf Stoß", also ohne Lücke oder Abstand zwischen zwei Packungen zu befördern. Durch diese Vorgehensweise können die Flächeninhalte und somit auch die Längen der erforderlichen Transportförderer beträchtlich reduziert werden. Ebenfalls wird durch diese Maßnahme die Standsicherheit der Packungen während des Transportes erhöht.

Es kann im Rahmen des Produktionsablaufes erforderlich sein, die Packungen für den nachfolgenden Prozess- oder Bearbeitungsschritt um ihre Hochachse zu drehen, wobei in vielen Fällen eine Drehung um 90° gewünscht ist.

Zur Lösung dieser Aufgabe wurde z.B. eine Vorrichtung nach der DE 42 14 321 C2 bekannt. Bei dieser Vorrichtung werden Packungen an ihrer Unterseite durch an gegenüberliegenden Enden dieser Unterseite positionierte Transportbänder befördert, wobei diese mit unterschiedlichen Geschwindigkeiten betrieben werden. Zumindest in einem Teilabschnitt ist zwischen den beiden Transportbändern ein weiteres, die Packungen aus der Vorrichtung abführendes Transportband angeordnet. Aufgrund der unterschiedlichen Geschwindigkeiten der Transportbänder werden die Packungen während ihres Transportes durch die Vorrichtung um ihre Hochachse zunächst um einen Winkel kleiner 90° gedreht. Nach dem die Packungen den Wirkungsbereich der beiden Transportbänder verlassen haben, werden diese durch das mittlere Transportband weiter gefördert und laufen anschließend gegen eine Anlaufkante welche bewirkt, dass die Drehung fortgesetzt wird. Anschließend gelangen die Packungen in einen Bereich trichterförmig angeordneter Seitenführungen, welche bewirken, dass die angestrebte Drehung um 90° beendet wird.

Als Nachteile einer derartigen Vorrichtung sind anzusehen, dass die Packungen für die Drehung nicht auf Stoß stehen dürfen und somit zuvor vereinzelt werden müssen, und dass das Anlaufen der Packungen gegen die Anlaufkante eine undefinierte, im Wesentlichen dem Zufall überlassene Drehung bewirkt.

Ebenfalls ist eine Vorrichtung gemäß der DE 42 14 321 C2 nur für geringe Anlagenleistungen geeignet.

Ebenfalls wurde eine Vorrichtung gemäß der DE 40 36 627 bekannt. Bei einer derartigen Vorrichtung werden die zu drehenden Packungen durch einen mindestens zweibahnigen Transportförderer bewegt, wobei eine Bahn des Transportförderers durch eine Lücke unterbrochen ist. Innerhalb dieser Lücke ist eine drehangetriebene, flache, bspw. kegelstumpfförmige Scheibe angeordnet.

Die Transportförderer sind derart angeordnet, dass die Packungen mit einer ihrer unteren, vorderen Ecken auf die Scheibe gefördert werden, wodurch zunächst diese vordere Ecke beschleunigt in Richtung der Mitte der Transportförderer bewegt wird.

Im weiteren Ablauf der Drehung wird die untere Längskante der Packung durch die Scheibe erfasst und nahezu in ihrer gesamten Länge auf dieser abgerollt. Da die Umfangsgeschwindigkeit der Scheibe in den Abrollpunkten höher ist, als die Bahngeschwindigkeit des Transportförderers wird die bereits begonnene Drehbewegung weiter fortgesetzt.

Durch die Anordnung von Seitenführungen und/oder vorteilhafte Steuerung der Geschwindigkeit des, an die Scheibe anschließenden Transportförderers wird die gewünschte 90°-Drehung abgeschlossen.

Auch bei diesem Vorschlag ist es erforderlich, dass die zu drehenden Packungen nicht auf Stoß, sondern mit Lücken in die Vorrichtung einlaufen. Ebenfalls erfolgt die Drehung im Wesentlichen undefiniert, so dass auch die Verwendbarkeit in höheren Leistungsbereichen fraglich erscheint.

Schließlich wurde mit der DE 30 43 469 C2 eine weitere Vorrichtung zur 90°-Drehung von Packungen vorgestellt. Bei dieser Vorrichtung wird die Drehung durch an einer senkrechten Drehachse angeordnete Umlenkteile bewirkt.

Dabei verharren diese Umlenkteile zunächst in einer Position, in welcher sie in der Lage sind die eine angeförderte Packung aufzunehmen. Stößt diese Packung an die Umlenkteile an, so wird eine Drehbewegung um 90° ausgelöst. Dabei gelangen die von den Umlenkteilen abgewandten Seitenflächen bzw. Kanten der Packung in den Wirkungsbereich eines angetriebenen Friktionsförderbandes, welches durch Führung und Transport der Seitenflächen oder Kanten derart auf die Packung einwirkt, dass deren Drehbewegung wirkungsvoll unterstützt wird.

Ist die Drehung einer Packung abgeschlossen, so verharren die Umlenkteile erneut so lange in ihrer Aufnahmeposition bis eine weitere Packung in die Vorrichtung eingelaufen ist.

Zwar erfolgt die Drehung bei dieser Vorrichtung im Wesentlichen gesteuert und definiert, doch verhindern die notwendige Lückenbildung und der diskontinuierliche Betrieb höhere Anlagenleistungen.

Bei allen bekannten Vorrichtungen zur Drehung von Packungen um ihre Hochachse ist es von besonderem Nachteil, dass die Packungen zur Drehung vereinzelt werden müssen. Diese Vereinzelung bedingt in der Regel eine Erhöhung der Geschwindigkeit der Packungen, was nicht nur zusätzlichen Anlagen- und Kostenaufwand bedeutet, sondern darüber hinaus auch noch die eigentliche Drehung erschwert.

Aufgabe und Ziel der vorliegenden Erfindung ist es, Vorrichtungen zum Drehen von Packungen um 90° so zu verbessern, dass der Drehvorgang kontrolliert und schneller erfolgen kann.

Dazu sieht die Erfindung eine Drehvorrichtung gemäß dem kennzeichnenden Teil des Anspruches 1 bzw. ein Verfahren gemäß dem kennzeichnenden Teil des Anspruches 14 vor. Vorteilhafte Weiterbildungen sind Bestandteil der Unteransprüche.

Im Nachfolgenden wird die vorliegende Erfindung anhand eines Ausführungsbeispieles näher erläutert.

Im Einzelnen zeigt die
- Figur 1: in einer vereinfachten 3D-Darstellung eine Gesamtübersicht über eine erfindungsgemäße Drehstation, und die
- Figur 2: in den Draufsichten a bis d in Einzelschritten den Ablauf beim Drehen von Packungen.

Weiterbildungen, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung. Gleichzeitig wird der Inhalt der Ansprüche zu einem Bestandteil der Beschreibung gemacht.

Der Umfang der vorliegenden Erfindung erstreckt sich nicht nur auf das Drehen der bislang behandelten viereckigen Packungen, sondern schließt ebenfalls das Drehen von 2-, 3- oder n-eckigen Packungen ein.

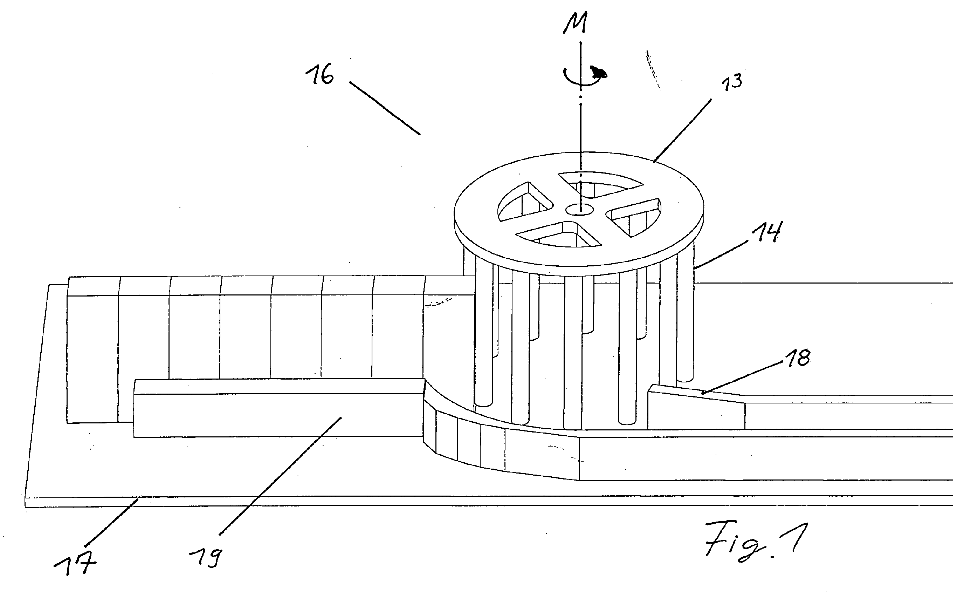

Wie in der Figur 1 dargestellt, ist die vorgestellte Drehvorrichtung 16 oberhalb eines Transportförderers, bspw. eines Transportbandes 17 angeordnet, wobei es nicht erforderlich ist, dass sich das Transportband über die gesamte Tiefe der Drehvorrichtung 16 erstreckt.

Die Drehvorrichtung 16 besteht aus einem Hauptrad 13, welches mit Abstand zur Transportbandebene angeordnet ist und durch eine nicht dargestellte Antriebsvorrichtung um seine Hauptachse M drehantreibbar ist.

An diesem Hauptrad 13 sind mehrere Drehelemente 14 angeordnet, welche sich ausgehend vom Hauptrad 13 im Wesentlichen senkrecht nach unten in Richtung der Ebene des Transportbandes 17 erstrecken.

Zur Führung der Packungen vor, während und nach ihrer Drehung sind eine Innenführung 18 und eine Außenführung 19 vorgesehen.

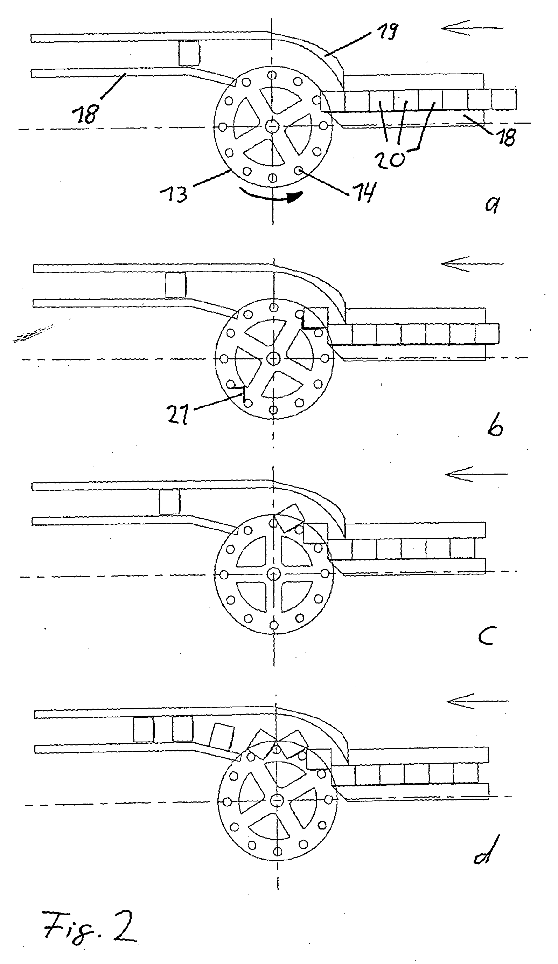

Der Funktion der Drehvorrichtung 16 wird in der Figur 2 in den Darstellungen a bis d gezeigt.

Die Packungen 20 werden durch das Transportband 17 der Drehvorrichtung 16 zugeführt. Dabei können die Packungen 20 auf Stoß angeordnet sein. Im Verlauf der Vorwärtsbewegung stößt jeder der Packungen 20 mit ihrer Frontseite gegen eines der Drehelemente 14, wodurch diese Bewegung verzögert, aber nicht auf den Wert Null abgesenkt wird. Dadurch, dass die Packungen 20 immer eine Geschwindigkeit größer Null aufweisen, eignet die vorgestellte Drehvorrichtung 16 insbesondere für den Hochleistungsbereich.

Mit fortschreitender Drehung des Hauptrades 13 wird die, an dem Drehelement 14 anliegende Packung 20 weiter in Förderrichtung bewegt. Bei Erreichen eines bestimmten Drehwinkels des Hauptrades 13 wird die an der Innenführung 18 anliegende Seite der Packung 20 vom nächsten Drehelement 14 erfasst.

Vorteilhafter Weise sind die Abmessungen von Hauptrad 13, Drehelementen 14 und den Führungen 18, 19 derart gewählt, dass die Packung durch das nächste Drehelemente 14 in ihrer Mitte, bzw. im Bereich zwischen Mitte und Rückseite erfasst wird, da die Drehung auf diese Weise optimal unterstützt wird.

Durch die weitere Drehung des Hauptrades 13 wird die Packung 20 zunächst von der Reihe der nachfolgenden Packungen 20 getrennt und während der weiteren Bewegung um einen bestimmten Winkel um ihre Hochachse gedreht. Wobei es von besonderem Vorteil ist, dass die Packungen 20 durch die Drehelemente 14 sicher geführt werden.

Während der Drehbewegung des Hauptrades 13 beschreiben die Drehelemente 14 u.a. einen Halbkreis quer zur Transportrichtung. Hat eine einzelne Packung 20 den Höhepunkt dieses Halbkreises überschritten, so läßt aufgrund der geometrischen Gegebenheiten die Führungswirkung der Drehelemente 14 nach. Ab einem bestimmten, auf die einzelne Packung 20 bezogenen Drehwinkel des Hauptrades 13 ist dieser Einfluss so gering, dass die Packung 20 durch das kontinuierlich angetriebene Transportband 17 mitgenommen und somit völlig vom Hauptrad 13 getrennt wird.

Nach einer kurzen Wegstrecke trifft die Packung 20 auf die Innenführung 18, wo sie so ausgerichtet und geführt wird, dass die gewünschte 90° Drehung abgeschlossen wird.

Da die Innenführung 18 die an ihr anliegende Seite der Packung 20 relativ zur gegenüberliegenden Seite der Packung 20 verzögern muss, ist es von besonderem Vorteil, den relevanten Abschnitt der Innenführung 18 derart auszugestalten, dass dieser einen, gegenüber der Außenführung 19 erhöhten Reibungskoeffizienten aufweist.

In einer weiteren Ausgestaltung der vorliegenden Erfindung ist vorgesehen, zumindest den relevanten Abschnitt der Außenführung 19 derart auszuführen, dass dieser die an ihm anliegende Seite der Packung 20 beschleunigt, wozu z.B. die Verwendung von aus einem angetriebenen Transportband bestehenden Führungen vorgesehen ist.

Ebenfalls ist im Rahmen der vorliegenden Erfindung vorgesehen, die relevanten Abschnitte von Innen- und Außenführung 18, 19 als angetriebene Transportbänder auszubilden, wobei diese mit der selben oder verschiedenen Geschwindigkeiten betrieben werden können.

Im dargestellten Ausführungsbeispiel weisen die Drehelemente 14 einen kreisförmigen Querschnitt auf. In einer weiteren Ausgestaltung der vorliegenden Erfindung ist vorgesehen, diesen kreisförmigen Querschnitt durch eine, an die äußere Kontur der Packungen 20 besser angepasste Gestalt zu ersetzen. So ist z.B. vorgesehen, die Drehelemente 14 als flächige Elemente auszubilden, welche großflächig mit den Seitenflächen der Packungen 20 in eine Wirkverbindung treten können. Ebenfalls ist vorgesehen, die Drehelemente 14 mit einem Führungselement 21 (Fig. 2b) zu versehen, welches an die Gestalt der Vorderkante der Packung 20 angepasst ist und somit eine sichere Drehung zusätzlich unterstützt.

Dadurch, dass das exemplarisch dargestellte Führungselement 21 eine Anschlagfläche bildet, welche verhindert, dass Packungen 20 oder Packungskanten so tief in die Drehvorrichtung eintauchen, dass sich diese später nicht wieder sicher aus der Drehvorrichtung lösen können, eignet sich eine solche Ausgestaltung insbesondere für das Drehen von 2- oder 3-eckigen Packungen.

In einer weiteren Ausgestaltung ist vorgesehen, die Drehelemente 14 um ihre Hochachse drehbar auszubilden, wodurch die sichere Drehung der Packungen 20 ebenfalls unterstützt wird. Exemplarisch wird diesbezüglich vorgeschlagen, die Drehelemente 14 während des Umlaufs des Hauptrades 13 durch eine nicht umlaufende Kurvenscheibe gesteuert zu drehen. Alternativ wird vorgeschlagen, die Drehbewegung der Drehelemente 14 durch Servomotoren ausführen zu lassen, wobei der Drehwinkel eines jeden Drehelementes 14 von seiner aktuell erreichten Winkelposition im 360°-Umlauf des Hauptrades 13 abhängig ist.

Um die vorgestellte Vorrichtung leicht auf unterschiedliche Packungsabmessungen einstellen zu können, wird für eine weitere Ausgestaltung vorgeschlagen, die Drehelemente 14 derart auszubilden, dass diese relativ zur Hochachse des Hautrades 13, radial und/oder kreisbogenförmig verstellbar in dem Hauptrad 13 gehalten sind.

Des Weiteren wird vorgeschlagen, dass die Drehelemente 14. derart in dem Hauptrad 13 gehalten sind, dass diese austauschbar sind.

Bei dem Antriebsmotor der nicht dargestellten Antriebsvorrichtung des Hauptrades 13 handelt es sich vorzugsweise um einen so genannten Servo- oder Synchronmotor. Im Rahmen dieser Anmeldung ist unter diesen Begriffen jede Art von Antriebsmotor zu verstehen, welche geregelt betrieben werden kann, wobei einzeln oder in beliebiger Kombination beispielsweise Drehwinkel, Drehrichtung, Winkelgeschwindigkeit und Drehmoment des Motors von einer Steuereinrichtung, z.B. einem Leitrechner vorgegeben, die erreichten Ist-Werten durch Sensoren ermittelt, nachfolgend in einer geeigneten Rechnereinrichtung mit den Soll-Werten verglichen und eventuelle Abweichungen durch automatische Gegenmaßnahmen korrigiert werden.
Durch die Verwendung eines derartigen Servomotors ist es z.B. möglich, das Hauptrad 13 nicht nur kontinuierlich sondern auch im Schrittbetrieb zu betreiben, so dass dieses nur dann in Betrieb ist, wenn Packungen zur Drehung anstehen.

## Patentansprüche

1. Drehstation zur Drehung von Packungen mit 2- oder n-eckigem Querschnitt, mit einer im Wesentlichen ebenen Grundfläche, welche von einem Transportförderer bewegt werden, um einen Winkel von vorzugsweise 90° um ihre Hochachse, **dadurch gekennzeichnet, dass** die Drehstation (16) zumindest aus einem drehangetriebenen Hauptrad (13) und mindestens einem an diesem Hauptrad angeordneten Drehelement (14) besteht.

2. Drehstation (16) nach Anspruch 1, **dadurch gekennzeichnet, dass** das Hauptrad (13) oberhalb des Transportförderers (15) angeordnet ist.

3. Drehstation (16) nach Anspruch 1 oder 2, **dadurch gekennzeichnet, dass** sich die Drehelemente (14) ausgehend vom Hauptrad im Wesentlichen senkrecht nach unten erstrecken.

4. Drehstation (16) nach einem der Ansprüche 1 bis 3, **dadurch gekennzeichnet, dass** die Drehelemente (14) einen Querschnitt aufweisen, welcher an die äußere Kontur der Packungen angepasst ist.

5. Drehstation (16) nach einem der Ansprüche 1 bis 4, **dadurch gekennzeichnet, dass** die Drehelemente (14) gesteuert um ihre Hochachse drehbar sind.

6. Drehstation (16) nach Anspruch 5, **dadurch gekennzeichnet, dass** Steuerung der Drehbewegung der Drehelemente (14) um ihre Hochachse mittels Kurvensteuerung erfolgt.

7. Drehstation (16) nach Anspruch 5, **dadurch gekennzeichnet, dass** Steuerung der Drehbewegung der Umlenkelemente um ihre Hochachse mittels Servomotoren und Leitrechner erfolgt.

8. Drehstation (16) nach einem der Ansprüche 1 bis 7, **dadurch gekennzeichnet, dass** die Drehelemente (14) relativ zur Hauptachse des Hauptrades (13) radial und/oder kreisbogenförmig verstellbar sind.

9. Drehstation (16) nach einem der Ansprüche 1 bis 8, **dadurch gekennzeichnet, dass** die Drehelemente (14) austauschbar sind.

10. Drehstation (16) nach einem der Ansprüche 1 bis 9, **dadurch gekennzeichnet, dass** die Seitenführungen (18, 19) unterschiedliche Reibungskoeffizienten aufweisen.

11. Drehstation (16) nach einem der Ansprüche 1 bis 10, **dadurch gekennzeichnet, dass** zumindest eine Seitenführung (18, 19) aus einem angetriebenen Element besteht.

12. Drehstation (16) nach einem der Ansprüche 1 bis 11, **dadurch gekennzeichnet, dass** an den Drehelementen (14) zumindest ein Führungselement (21) befestigt ist.

13. Verfahren zur Drehung von Packungen mit 2- oder n-eckigem Querschnitt, mit einer im Wesentlichen ebenen Grundfläche, welche von einem Transportförderer bewegt werden, um einen Winkel von vorzugsweise 90° um ihre Hochachse, **dadurch gekennzeichnet, dass** die Packungen (20) der Drehvorrichtung ohne Lücke zugeführt werden und ohne vorhergehende Vereinzelung um einen Winkel von vorzugsweise 90° um ihre Hochachse gedreht werden.

14. Verfahren nach Anspruch 13, **dadurch gekennzeichnet, dass** die Packungen innerhalb der Drehstation (16) immer eine Geschwindigkeit größer Null aufweisen.

15. Verfahren nach einem der Ansprüche 13 bis 14, **dadurch gekennzeichnet, dass** die Drehelemente (14) an den Flächen und/oder Kanten der Packungen (20) angreifen.

16. Verfahren nach einem der Ansprüche 13 bis 15, **dadurch gekennzeichnet, dass** die Drehstation (16) kontinuierlich und/oder diskontinuierlich betrieben wird.
